# EUROPEAN PATENT SPECIFICATION

(11) **EP 0 650 407 B1**
(45) Date of publication and mention of the grant of the patent: **21.01.1998**
(21) Application number: 93911911.1
(22) Date of filing: 05.05.1993
(51) Int. Cl.: B29C 43/48, B29C 43/30

(54) **APPARATUS AND METHOD FOR COMPRESSING A CONTINUOUS WEB**
VERFAHREN UND VORRICHTUNG ZUM ZUSAMMENDRÜCKEN EINER KONTINUIERLICHEN BAHN
APPAREIL ET PROCEDE DE COMPRESSION D'UNE BANDE CONTINUE

(30) Priority: 07.07.1992 GB 9214401
(43) Date of publication of application: 03.05.1995
(73) Proprietor: James Halstead Limited, Whitefield Manchester M25 7NR (GB)
(72) Inventor: EDGE, David Thomas, Heaton, Bolton BL1 4LZ (GB)
(74) Representative: Holmes, Matthew Peter
(86) International application number: GB9300921
(87) International publication number: WO9401265

(56) References cited:
- EP-A- 0 226 946
- EP-A- 0 228 654
- DE-C- 3 724 011

## Description

The present invention relates to a method and apparatus for compressing a continuous length of web. Particularly, but not exclusively, the method and apparatus are intended for the pressing of a patterned vinyl web to be used to form floor coverings.

Conventional methods and apparatus for the pressing of a vinyl web used in the formation of floor coverings comprise compressing a continuous length of web between two steel belts, whilst feeding the web firstly around a heating drum and then a cooling drum. The purpose of the heating drum is to soften the web to increase its compressibility. The cooling drum then cools the web before it leaves the press.

In such a conventional rotary press the drums are arranged so that the web travels in a generally "S" shaped path around the two drums. To ensure that the web is efficiently heated throughout its thickness further heating apparatus is provided to heat the surface of the web facing away from the heating drum. Similarly, to ensure efficient cooling of the web throughout its thickness cooling apparatus is provided to cool the face of the web facing away from the cooling drum.

In the conventional arrangement the upper surface of the web faces toward the heating drum and away from the cooling drum. The steel belt in contact with this upper surface will be referred to as the upper belt and the belt which contacts the lower surface of the web will be referred to as the lower belt.

Only the upper belt is directly driven, by means of a drive roller downstream of the cooling drum. The web is drawn along as a result of the friction between the web and the upper belt as they pass around the cooling drum at which point the web is most viscous. Similarly, the lower belt is drawn along its path as a result of the friction between it and the web.

Inevitably there is some slippage between the belts, the upper belt travelling faster than the lower belt. The relative slippage between the belts is greatest around the heating drum, as at this stage the lower belt, which is travelling slowest, is outermost and therefore has a greater circumferential distance to travel than the upper belt which is innermost.

As the belts slip relative to each other during their passage around the drums shear forces are applied to the web which is trapped in compression between the belts. The shearing effect is greatest around the heating drum at which stage the slippage is greatest and the web is warmest and therefore least viscous, but is also evident around the cooling drum.

The above described shearing effect is very disadvantages when the web being compressed is patterned. Conventionally, the pattern is introduced to the web by the addition of coloured vinyl powder or granules in a calender which forms the web upstream of the press, the powder producing a coloured pattern which penetrates throughout the thickness of the web. As the coloured web passes through the rotary press the shearing effect smears the pattern on the upper and lower surfaces of the web. This is obviously an undesirable effect of the rotary pressing process.

To counter this unwanted smearing of the pattern, the conventional technique is to produce the web to a thickness twice that required for the finished product. The web is then split into two webs of half the thickness of the original. The shearing effect at the centre of the original web is minimal, and thus the pattern on the cut surface of each of the resultant half thickness webs is not smeared. The cut surface of each resultant web is then refinished, by for example grinding, to form the upper surface of the finished product.

The process of splitting the initial web and refinishing the resultant half thickness webs represents a major disadvantage associated with the conventional use of rotary presses for this application.

Accordingly it is an object of the present invention to obviate or mitigate the above disadvantages.

According to a first aspect of the present invention there is provided a method for compressing a continuous web, in which a first surface of the web is placed in contact with a first belt, a second surface of the web is placed in contact with a second belt, and the belts are passed around at least a first rotating drum with the web sandwiched therebetween to compress the web, wherein a temperature gradient is established through the thickness of the web such that the first surface is at a higher temperature than the second surface, the temperature gradient being sufficient such that shear forces applied to the web by the belts cause shearing of the web at or adjacent the first surface of the web rather than at or adjacent the second surface of the web.

Thus, where the web is patterned, smearing of the pattern is substantially limited to one surface of the web only, i.e. the first surface. This surface may then form the undersurface of the finished product where smearing of the pattern is of very little importance. The largely unsmeared second surface then forms the upper surface of the finished product.

Preferably the first rotating drum is used as a heat source to heat the radially innermost surface of the web and additional heaters are provided external to the first rotating drum to heat the radially outermost surface of the web. For instance radiant or convective heaters may be used.

By carefully controlling the temperature of the first drum and the radiant heaters, the required temperature gradient can be accurately established and maintained. Preferably the temperature gradient throughout the thickness of the web at any given portion of the web is maintained at a substantially constant value as that portion of the web passes around the drum.

Preferably the web is fed to the first rotating drum such that the first surface of the web is radially innermost.

Preferably the first surface of the web is heated to a temperature approximately ten to fifteen degrees Celsius higher than the second surface of the web.

Preferably the web is pre-heated prior to its passage to the first rotating drum to substantially establish the required temperature gradient through the thickness of the web before it reaches the first rotating drum.

The method preferably comprises a further step of passing the web sandwiched between the two belts around a second rotating drum downstream of the first rotating drum and cooling the web as it passes around the second rotating drum. Preferably the web is cooled in such a manner that the first surface of the web is maintained at a higher temperature than the second surface of the web as the web passes around the second rotating drum.

The second rotating drum forms a cooling means to cool the second surface of the web and additional cooling means may be provided external to the second rotating drum to cool the first surface of the web.

In a preferred embodiment of the invention the first and second belts are individually driven and their relative velocities are controlled such that there is no slippage between the belts as they pass around the second rotating drum. In this manner all the slippage and therefore shearing can be confined to the passage of the web around the first, heating, drum. With this embodiment there is no requirement to maintain the temperature gradient through the web as it passes around the second, cooling drums as there is no shearing at this stage.

According to a second aspect of the present invention there is provided apparatus for compressing a continuous web, comprising a first belt placed in contact with a first surface of the web and a second belt placed in contact with a second surface of the web, at least a first rotating drum around which the belts are passed with the web sandwiched therebetween to compress the web, wherein means are provided for establishing a temperature gradient through the thickness of the web such that the first surface is at a higher temperature than the second surface, the temperature gradient being sufficient such that shear forces applied to the web by the belts cause shearing of the web at or adjacent the first surface of the web rather than at or adjacent the second surface of the web, and wherein means are provided for feeding the web to the first rotating drum such that the first surface of the web is radially innermost.

The apparatus is preferably used in accordance with a method as described above.

Preferably the first rotating drum is used as a heat source to heat the radially innermost surface of the web and additional heaters are provided external to the first rotating drum to heat the radially outermost surface of the web. The additional heaters may, for instance, be radiant or convective heaters.

Preferably cooling means are disposed externally to the first rotating drum whereby the temperature of the web and the first rotating drum can be rapidly decreased if required thereby providing for greater control over the temperature of the web as it passes around the first rotating drum. The cooling means may, for instance, comprise a high velocity cooling air nozzle system.

Means may be provided to pre-heat the web prior to its passage to the first rotating drum to thereby substantially establish the required temperature gradient through the web before it reaches the first rotating drum. The pre-heating means may, for instance, comprise a rotating drum around which the web passes sandwiched between the two belts and an arrangement of radiant heaters disposed externally to the pre-heating drum.

Preferably the temperature gradient throughout the thickness of the web at any given portion of the web is maintained at a substantially constant value as that portion of the web passes around the drum.

Preferably the first surface of the web is heated to a temperature approximately ten to fifteen degrees Celsius higher than the second surface of the web.

Preferably a second rotating drum is provided downstream of the first rotating drum and means are provided for cooling the web as it passes around the second rotating drum. Preferably the web is cooled in such a manner that the first surface of the web is maintained at a higher temperature than the second surface of the web as the web passes around the second rotating drum. The second rotating drum may form a cooling means to cool the second surface of the web and addition cooling means may be provided external to the second rotating drum to cool the first surface of the web.

Means may be provided for individually driving the first and second belts and controlling their relative velocities such that there is no slippage between the belts as they pass around either the first or the second rotating drum.

Specific embodiments of the present invention will now be described, by way of example, with reference to the accompanying drawings, in which;
Figure 1 schematically illustrates prior art apparatus for compressing a continuous web;
Figure 2 schematically illustrates one embodiment of apparatus according to the present invention;
Figure 3 is a plot showing the temperature gradient maintained throughout the thickness of a web during a compression process according to the present invention; and
Fig. 4 schematically illustrates a second embodiment of apparatus according to the present invention.

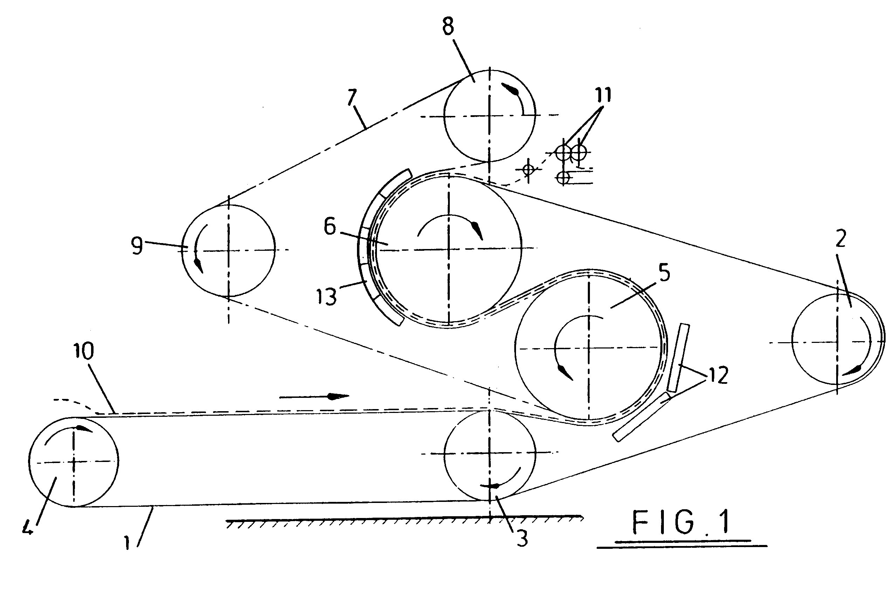

Referring to Figure 1, this illustrates an example of a prior art rotary press of the type discussed above. A lower steel belt 1 travels in a continuous loop around rollers 2, 3 and 4, and around a rotating heating drum 5 and a rotating cooling drum 6. An upper steel belt 7 also travels around the heating drum 5 and cooling drum 6 and around rollers 8 and 9.

The drums 5 and 6 are arranged such that the belts 1 and 7 travel around them in a "S" shaped path, the upper belt 7 being innermost as the belts pass around the heating drum 5 and the lower belt 1 being innermost as the belts pass around the cooling drum 6.

The rollers 2, 3 and 4, and 8 and 9, serve to tension the respective belts and define the path in which they are to travel.

A continuous length of low tensile strength web 10, typically formed from vinyl, is fed onto the lower belt 1 from a calender (not shown). The web 10 has a pattern formed into it throughout its thickness by the incorporation of coloured vinyl granules into a base mix of vinyl of a different colour in the calender when the web 10 is formed.

The web 10 is then supported by the lower belt 1 and conveyed to the heating drum 5. At the heating drum 5 the upper and lower belts come together and the web 10 becomes sandwiched between the two belts. The web 10 remains sandwiched between the two belts as they pass around the heating drum 5 and cooling drum 6. Thereafter the upper and lower belts separate, the upper belt 7 passing to roller 8 and the lower belt 1 passing to roller 2, and the web 10 is fed off to rollers 11.

The web 10 is thus compressed between the belts as it passes around the heating drum 5 and cooling drum 6. Additional radiant heaters 12 and cooling apparatus 13 are provided around the heating drum 5 and cooling drum 6 respectively to ensure efficient heating and cooling throughout the thickness of the web 10.

As described above, the smearing of the pattern at the surfaces of the web 10 resulting from the shearing forces applied to the web 10 by the belts 1 and 7 as it passes around the drums 5 and 6, necessitates further operations, for example splitting and refinishing the web downstream of the rollers 11.

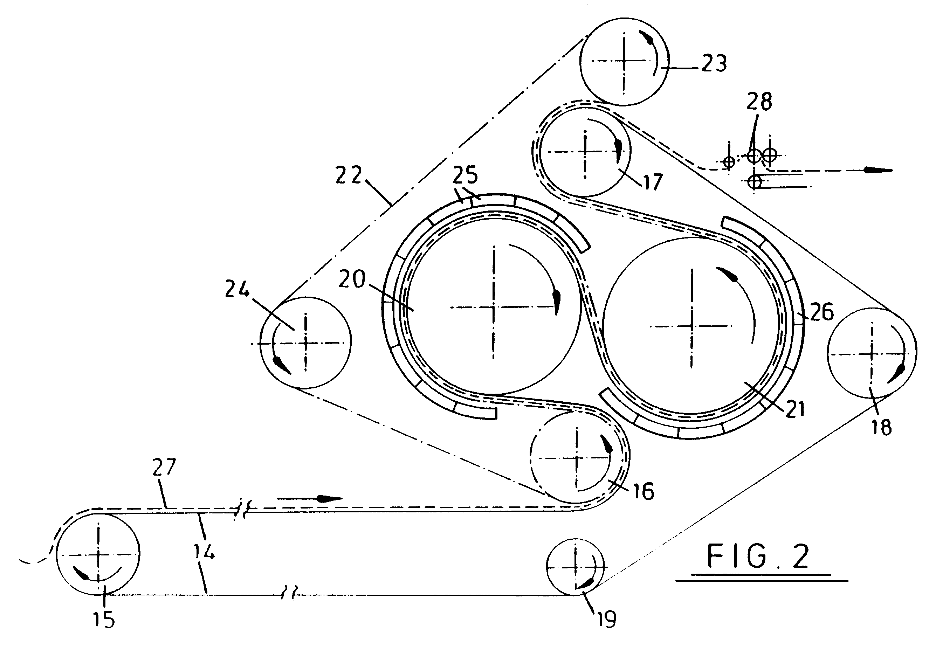

A method and apparatus according to the present invention which overcomes the disadvantages of the above described method and apparatus will now be described. Referring to Figure 2, a lower steel belt 14 travels in a continuous loop around, in sequence, a roller 15, a roller 16, a rotating heating drum 20, a rotating cooling drum 21, a roller 17, a roller 18, a roller 19 and then back to roller 15. An upper belt 22 travels in sequence around the roller 16, the heating drum 20 the cooling drum 21, the roller 17, a roller 23, a roller 24 and then back to the roller 16.

Fixed radiant heaters 25 are disposed around the heating drum 20 enclosing substantially all the area of the heating drum 20 around which the belts 14 and 22 actually pass. Similarly a cooling system 26 is disposed around the cooling drum 21 enclosing substantially all the area of the cooling drum 21 around which the belts 14 and 22 actually pass. It will be seen that the lower belt 14 contacts the heating drum 20 whereas the upper belt 22 contacts the cooling drum 21.

A continuous length of vinyl web 27 produced by a calender (not shown) is fed onto the lower belt 14. A pattern is formed on the upper surface of the web 27 either by the incorporation of coloured vinyl granules into a base vinyl in the calender or by distributing powdered vinyl onto the upper surface of a preformed web. The latter method may be employed as there is no particular requirement for the pattern to extend all the way through the thickness of the web, as in the prior art, as the web will not need splitting. The pattern forming process may be carried out upstream of the belt 14 or, by the latter described method, subsequent to the web 27 being fed to the lower belt 14 but before it reaches the roller 16.

As the web 27 reaches the roller 16 it becomes sandwiched between the lower belt 14 and the upper belt 22. The web 27 remains sandwiched between the two belts 14 and 22 as they pass around the roller 16, the heating drum 20 the cooling drum 21 and the roller 17. Thereafter the upper and lower belts separate, the upper belt 22 passing to the roller 23 and the lower belt 14 passing to the roller 18. At this point the web 27 is fed off to rollers 28.

In a similar manner to that described above in relation to the prior art, the web 27 is compressed under heating and cooling between the two belts 14 and 22 as they pass around the heating and cooling drums respectively. However, unlike in the prior art, the configuration and operation of the heating drum 20 and the heaters 25, and the cooling drum 21 and the cooling apparatus 26 is carefully controlled to establish a temperature differential between the upper and lower belts and thus between the upper and lower surfaces of the web 27.

The lower belt 14, which contacts and is heated by the heating drum 20, is heated to a higher temperature than the upper belt 22 which is heated by the radiant heaters 25. This establishes a temperature gradient through the thickness of the web 27, the web being hottest in the region of its lower surface which is in contact with the lower belt 14. The shearing forces applied to the web 27 by the belts 14 and 22 will have their greatest effect where the web 27 is least viscous, i.e. where it is the hottest. Thus by appropriately selecting the temperatures to which the two belts are to be heated, and by carefully controlling the temperatures of the heating drum 20 and the heaters 25 accordingly, a temperature gradient is established within the web 27 such that substantially all of the shearing effect is confined to the region of the lower surface. Thus, the patterned upper surface of the web 27 remains largely unsmeared as it passes around the heating drum 20.

Similarly, the cooling apparatus 26 and the cooling drum 21 are controlled so that the lower belt is maintained at a higher temperature than the upper belt as they pass around the cooling drum. Thus any smearing which occurs as the web 27 passes around the cooling drum will again be confined to the lower surface of the web.

In order to control and maintain the desired temperature gradient with the required accuracy, the heaters 25 and cooling apparatus 26 extend over substantially all the area of the respective drums over which the belts pass.

The exact temperatures to which the two belts must be heated is dependant on a number of factors including; the material from which the web is formed, the thickness of the web, the degree and duration of the application of compressive forces to the web.

Typically the web will be heated to the order of 175⁰C with a differential between the temperatures of the two belts of approximately 10⁰C.

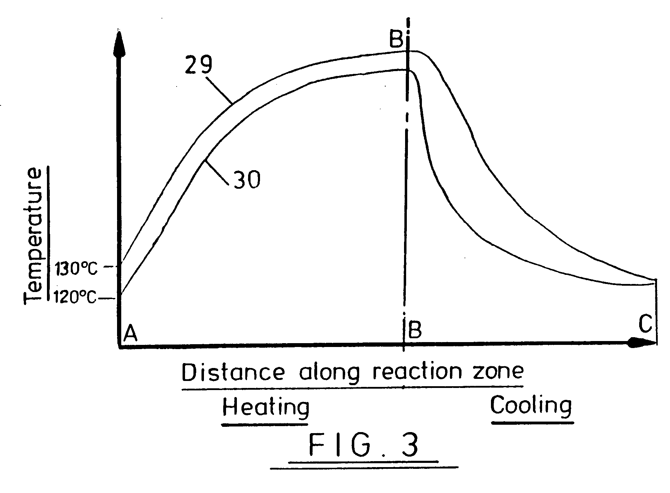

An example of the temperature profile of the upper and lower surfaces of the web 27 throughout the heating and cooling process is illustrated by the plot of Figure 3. This plot shows the temperature profile through a given portion of web 27 as it passes over the heating roller 20 and cooling roller 21. This is referred to as the reaction zone. The area between the references A and B represents the passage of the web 27 around the heating drum 20, whereas the area between references B and C represents the passage of the web 27 around the cooling drum 21. The upper line 29 plots the temperature of the lower surface of the web and the lower line 30 plots the temperature of the upper surface of the web. The required temperature at which the web 27 enters the reaction zone will vary according to the operating speed of the apparatus. Thus the entry temperatures of 120°C and 130°C for the lower and upper surfaces of the web respectively are only typical values.

The capacity, i.e. maximum line speed, of the machine may be increased by pre-heating the belts 14 and 22 before they pass to the heating drum 20. This may be achieved, for instance, by heating drums 15 and 24 and/or by providing heated plattens in between the drum 15 and the drum 16.

The positioning of the various rollers is such that the web and belts follow the most convenient and efficient path. In particular, the roller 16 ensures that the lower belt 14 which is to be heated to the highest temperature contacts the heating drum 20 and the roller 17 ensures that the web 27 leaves the apparatus with the unsmeared surface facing upwards.

Thus, through the provision of the particular arrangement of the rollers and of the heaters 25 and cooling apparatus 26, the described apparatus is specially constructed to perform the method according to the present invention.

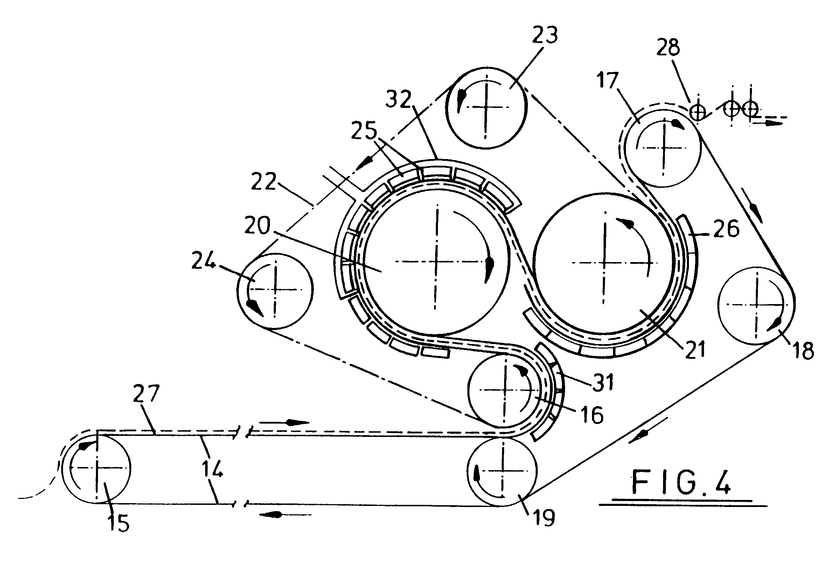

A modified apparatus in accordance with the present invention is illustrated in Fig. 4. The apparatus as shown in Fig. 4 is substantially the same as that shown in Fig. 2 and described above and thus like reference numerals will be used for like components throughout the following description.

Referring to Fig. 4, fixed radiant heaters 31 are disposed around the roller 16. In addition, the roller 16 is itself heated. A system of high velocity cooling air nozzles 32 is arranged around the heating drum 20 interspersed with the radiant heaters 25. Rollers 17 and 23 are arranged differently from the apparatus shown in Fig. 2 such that the web 27 is not sandwiched between the two belts 14 and 22 as it passes around the roller 17.

Referring firstly to the radiant heaters 31 and the heating of the drum 16, this is to provide for pre-heating of the web 27 to establish the desired temperature gradient through the thickness of the web 27 before the web passes to the heating drum. This increases the potential capacity of the apparatus as it may be run at a high speed. As in the case of the apparatus illustrated in Fig. 2 and described above, additional preheating may be achieved by heating the drums 15 and 24 and/or by the provision of platten heaters in between the drum 15 and the drum 19.

The high velocity cooling air nozzle arrangement 32 is provided so that the apparatus can more readily accommodate sudden line speed changes which may be required to control production rates. For instance, if the belt speed is suddenly reduced to slow down production rate the web 27 will spend a greater period of time around the heating drum 20 which may well result in it being heated to a temperature far higher than desired. This can result in an equalisation of temperature through the thickness of the web 27 and the loss of the desired effect on the smearing characteristics. In such circumstances it is necessary to reduce the temperature output of both the radiant heaters 25 and the heating drum 20 to ensure that the web 27 is not heated to too high a temperature but to maintain the required temperature gradient. Although the heat output of the radiant heaters 25 can readily and quickly be reduced simply by reducing the power supplied to the heaters 25 this is not so with the heating drum 20 which has a large thermal inertia. Thus, the cooling air nozzles 32 are provided to speed up the cooling process of the heating drum and thus the modified apparatus illustrated in Fig. 4 can much more readily accommodate changes in the line speed of the apparatus and therefore increase its efficiency.

It is not absolutely necessary for the cooling air nozzles 32 to be interspersed amoungst the heaters 25. For instance, the cooling air nozzles may be arranged downstream of the heaters 25.

Referring to the re-arrangement of the rollers 17 and 23, this is done to avoid any chance of smearing of the web as it passes around the roller 17. As the web 27 passes around the roller 17 the surface of the web facing the roller may cool down at a much more rapid rate than the surface of the web 27 facing away from the roller as there is a superior heat transfer in this direction. In some cases this may result in a significant and undesirable affect to the temperature differential established between the two surfaces of the web 27. With the apparatus shown in Fig. 2 in which the web 27 is trapped between the belts 14 and 22 as it passes around the roller 17 such alterations in the temperature gradient across the web 27 could have adverse affects on the smearing characteristics of the web 27. In extreme cases the temperature gradient may well be reversed in direction such that any smearing that occurs at this point is confined to the upper surface of the web 27 which is obviously undesirable. With the apparatus shown in Fig 4 this possibility is avoided by rearranging the rollers 17 and 23 so that the web 27 is not sandwiched between the two belts 14 and 22 as it passes around the roller 17 and therefore there is no shearing force applied to the web at this stage.

The remote heaters employed in the apparatus illustrated in Figs. 2 and 4 and described above are radiant type heaters but it will be understood that other forms of heating may be used. For instance, hot air impingent, i.e. convective, heaters may be used.

Thus it will be seen that the apparatus shown in Fig. 4 possesses features which may well be advantageous in some applications of the apparatus but these advantageous features will not necessarily be required for all applications.

As a modification to the above described method and the apparatus shown in Fig. 2 and Fig. 4, provision could be made to independently drive the upper and lower belts. The relative velocities of the two belts may then be controlled to ensure that there is no slippage between the belts as they pass around either the heating drum 20 or the cooling drum 21. In this instance all slippage, and therefore shearing, will be confined to the region of one of the drums only. There will thus be no need to maintain a temperature gradient through the thickness of the web as it passes around the drum at which there is no slippage.

The belt velocities could be controlled so that the slippage takes place at either the heating or cooling drum, but it will generally be preferable to confine the slippage to the heating drum at which the web is least viscous and therefore offers the least resistance.

It will be understood that prior art apparatus, such as that shown in Figure 1 and described above, could be adapted to perform the method according to the present invention, albeit less satisfactorily than the apparatus shown in Figs. 2 and 4 and described above.

For instance, referring to Figure 1, the heaters 12 and cooling apparatus 13 could be adapted, or more preferably replaced, to enable the accurate control of the temperature of the web 10 to establish and maintain the required temperature differential throughout the thickness of the web. In addition it would be necessary to heat the lower belt 1 to the highest temperature if the unsmeared surface is to exit the apparatus facing upwards. This would involve using the heaters 12 (suitably adapted) to generate the highest temperature as opposed to the heating drum as with the apparatus of Figure 2. Similarly, in order to maintain the upper belt 7 at a lower temperature than the lower belt 1 as they pass around the cooling drum 6, it would be necessary to arrange for the cooling apparatus 13 to produce the lower temperature rather than the cooling drum 6.

It would not be possible, however, to use the prior art apparatus to perform the modified method described above, in which the two belts are independently driven at different velocities. In the prior art apparatus of Figure 1 only the upper belt is directly driven, the lower belt being dragged along by friction.

## Claims

1. A method for compressing a continuous web (27), in which a first surface of the web is placed in contact with a first belt (14), a second surface of the web is placed in contact with a second belt (22), and the belts are passed around at least a first rotating drum (20) with the web sandwiched therebetween to compress the web (27), wherein a temperature gradient is established through the thickness of the web such that the first surface is at a higher temperature than the second surface, the temperature gradient being sufficient such that shear forces applied to the web by the belts cause shearing of the web at or adjacent the first surface of the web rather than at or adjacent the second surface of the web.

2. A method according to claim 1, wherein the first rotating drum (20) is used as a heat source to heat the radially innermost surface of the web and additional heaters (25) are provided external to the first rotating drum to heat the radially outermost surface of the web.

3. A method according to claim 2, wherein the additional heaters are radiant heaters.

4. A method according to claim 2, wherein the additional heaters are convective heaters.

5. A method according to any preceding claim, wherein the temperature gradient throughout the thickness of the web at any given portion of the web is maintained at a substantially constant value as that portion of the web passes around the first rotating drum.

6. A method according to any preceding claim, wherein the web is fed to the first rotating drum such that the first surface of the web is radially innermost.

7. A method according to any preceding claim, wherein the first surface of the web is heated to a temperature approximately ten to fifteen degrees Celcius higher than the second surface of the web.

8. A method according to claim 2 and any claim dependant on claim 2, comprising a further step of passing the web sandwiched between the two belts around a second rotating drum (21) downstream of the first rotating drum, and cooling the web as it passes around the second rotating drum.

9. A method according to claim 8, wherein the web is cooled in such a manner that the first surface of the web is maintained at a higher temperature than the second surface of the web as the web passes around the second rotating drum (21).

10. A method according to claim 8 or claim 9, wherein the second rotating drum (21) forms a cooling means to cool the second surface of the web and additional cooling means (26) is provided external to the second rotating drum to cool the first surface of the web.

11. A method according to any one of claims 8 to 10, wherein the first and second belts (14, 22) are individually driven and their relative velocities are controlled such that there is no slippage between the belts as they pass around the second rotating drum (21).

12. A method according to any one of claims 1 to 10, wherein the first and second belts (14, 22) are individually driven and their relative velocities are controlled such that there is no slippage between the belts as they pass around the first rotating drum (20).

13. A method according to claim 2 and any claim dependent upon claim 2, wherein the web is preheated prior to its passage to the first rotating drum to substantially establish the required temperature gradient through the thickness of the web before it reaches the first rotating drum.

14. Apparatus for compressing a continuous web (27), comprising a first belt (14) placed in contact with a first surface of the web, a second belt (22) placed in contact with a second surface of the web, and at least a first rotating drum around which the belts are passed with the web sandwiched therebetween to compress the web (27), wherein means are provided for establishing a temperature gradient through the thickness of the web such that the first surface is at a higher temperature than the second surface, the temperature gradient being sufficient such that shear forces applied to the web by the belts cause shearing of the web at or adjacent the first surface of the web rather than at or adjacent the second surface of the web, and wherein means (16) are provided for feeding the web to the first rotating drum such that the first surface of the web is radially innermost.

15. Apparatus according to claim 14, wherein laid web feeding means includes a guide roller positioned upstream of said first rotating drum.

16. Apparatus according to claim 14 or 15 wherein a guide roller (17) is provided at a downstream end of the apparatus for ensuring that the web leaves the apparatus with said second surface of the web uppermost.

17. Apparatus according to any one of claims 14 to 16, wherein the first rotating drum (20) is used as a heat source to heat the radially innermost surface of the web and additional heaters (25) are provided external to the first rotating drum to heat the radially outermost surface of the web.

18. Apparatus according to claim 17, wherein the additional heaters are radiant heaters.

19. Apparatus according to claim 17, wherein the additional heaters are convective heaters.

20. Apparatus according to any one of claims 14 to 19, wherein cooling means (26) are disposed externally to the first rotating drum whereby the temperature of the web and the first rotating drum can be rapidly decreased if required thereby providing for greater control over the temperature of the web as it passes around the first rotating drum.

21. Apparatus according to claim 20, wherein the cooling means comprises a high velocity cooling air nozzle system.

22. Apparatus according to any one of claims 17 to 21, wherein means are provided to preheat the web prior to its passage to the first rotating drum to thereby substantially establish the required temperature gradient through the web before it reaches the first rotating drum.

23. Apparatus according to claim 22, wherein said pre-heating means comprises a rotating drum (16) around which the web passes sandwiched between the two belts and an arrangement of heaters (31) disposed externally to the pre-heating drum.

24. Apparatus according to any one of claims 14 to 23, wherein the temperature gradient throughout the thickness of the web at any given portion of the web is maintained at a substantially constant value as that portion of the web passes around the first rotating drum.

25. Apparatus according to any one of claims 14 to 24, wherein the first surface of the web is heated to a temperature approximately ten to fifteen degrees Celsius higher than the second surface of the web.

26. Apparatus according to claim 17 and any claim dependent on claim 17, further comprising a second rotating drum (21) downstream of the first rotating drum (20) and means for cooling the web as it passes around the second rotating drum.

27. Apparatus according to claim 26, wherein the web is cooled in such a manner that the first surface of the web is maintained at a higher temperature than the second surface of the web as the web passes around the second rotating drum.

28. Apparatus according to claim 26 or claim 27, wherein the second rotating drum forms a cooling means to cool the second surface of the web and additional cooling means (26) is provided external to the second rotating drum to cool the first surface of the web.

29. Apparatus according to any one of claims 26 to 28, wherein means are provided for individually driving the first and second belts and controlling their relative velocities such that there is no slippage between the belts as they pass around the second rotating drum.

30. Apparatus according to any one of claims 14 to 28, wherein means are provided for individually driving the first and second belts and controlling their relative velocities such that there is no slippage between the belts as they pass around the first rotating drum.

## Patentansprüche

1. Verfahren zum Zusammendrucken einer Endlosbahn (27), bei dem eine erste Bahnoberfläche mit einem ersten Laufband (14) in Berührung gebracht wird, eine zweite Bahnoberfläche mit einem zweiten Laufband (22) in Berührung gebracht wird und die Laufbänder um wenigstens eine erste Umlauftrommel (20) herum geführt werden, wobei sich die Bahn zum Zusammendrücken der Bahn (27) in Sandwichform dazwischen befindet, bei dem durch die Bahndicke ein Temperaturgefälle hergestellt wird, so daß sich die erste Oberfläche auf einer höheren Temperatur als die zweite Oberfläche befindet, wobei das Temperaturgefälle so groß ist, daß die durch die Laufbänder auf die Bahn einwirkenden Scherkräfte bei oder nahe der ersten Bahnoberfläche und nicht bei oder nahe der zweiten Bahnoberfläche ein Scheren der Bahn hervorrufen.

2. Verfahren nach Anspruch 1, bei dem die erste Umlauftrommel (20) als Heizquelle zum Beheizen der radial ganz innen gelegenen Bahnoberfläche verwendet wird und außerhalb der ersten Umlauftrommel Zusatzheizungen (25) zum Beheizen der radial ganz außen gelegenen Bahnoberfläche vorgesehen sind.

3. Verfahren nach Anspruch 2, bei dem die Zusatzheizungen Heizstrahler sind.

4. Verfahren nach Anspruch 2, bei dem die Zusatzheizungen Konvektionsheizkörper sind.

5. Verfahren nach einem der vorhergehenden Ansprüche, bei dem das durch die ganze Bahndicke gehende Temperaturgefälle an jedem gegebenen Bahnabschnitt im wesentlichen konstant gehalten wird, während dieser Bahnabschnitt um die erste Umlauftrommel herum läuft.

6. Verfahren nach einem der vorhergehenden Ansprüche, bei dem die Bahn der ersten Umlauftrommel so zugeführt wird, daß die erste Bahnoberfläche radial ganz innen liegt.

7. Verfahren nach einem der vorhergehenden Ansprüche, bei dem die erste Bahnoberfläche so beheizt wird, daß ihre Temperatur etwa zehn bis fünfzehn Grad Celsius höher liegt als die der zweiten Bahnoberfläche.

8. Verfahren nach Anspruch 2 und nach einem der Unteransprüche von Anspruch 2, umfassend als weiteren Schritt, daß die in Sandwichform zwischen den beiden Laufbändern liegende Bahn um eine zweite, der ersten Umlauftrommel nachgeschaltete Umlauftrommel (21) geführt und die Bahn beim Umlaufen der zweiten Umlauftrommel gekühlt wird.

9. Verfahren nach Anspruch 8, bei dem die Bahn so gekühlt wird, daß die erste Bahnoberfläche beim Umlaufen der Bahn auf der zweiten Umlauftrommel (21) bei einer höheren Temperatur gehalten wird als die zweite Bahnoberfläche.

10. Verfahren nach Anspruch 8 oder Anspruch 9, bei dem die zweite Umlauftrommel (21) ein Kühlmittel zum Abkühlen der zweiten Bahnoberfläche bildet und außerhalb der zweiten Umlauftrommel ein Zusatzkühlmittel (26) zum Abkühlen der ersten Bahnoberfläche vorgesehen ist.

11. Verfahren nach einem der Ansprüche 8 bis 10, bei dem das erste und das zweite Laufband (14, 22) einzeln angetrieben und ihre Relativgeschwindigkeit zueinander gesteuert wird, so daß die Laufbänder beim Umlaufen der zweiten Umlauftrommel (21) nicht gegenseitig verrutschen.

12. Verfahren nach einem der Ansprüche 1 bis 10, bei dem das erste und das zweite Laufband (14, 22) einzeln angetrieben und ihre Relativgeschwindigkeit zueinander gesteuert wird, so daß die Laufbänder beim Umlaufen der ersten Umlauftrommel (20) nicht gegenseitig verrutschen.

13. Verfahren nach Anspruch 2 und nach einem der Unteransprüche von Anspruch 2, bei dem die Bahn vor ihrer Zuführung zur ersten Umlauftrommel so vorgeheizt wird, daß das durch die Bahndicke erforderliche Temperaturgefälle im wesentlichen noch bevor die Bahn die erste Umlauftrommel erreicht hergestellt ist.

14. Vorrichtung zum Zusammendrücken einer Endlosbahn (27), umfassend ein erstes Laufband (14), das mit einer ersten Bahnoberfläche in Berührung gebracht wird, ein zweites Laufband (22), das mit einer zweiten Bahnoberfläche in Berührung gebracht wird, und wenigstens eine erste Umlauftrommel, um die herum die Laufbänder geführt werden, wobei sich die Bahn zum Zusammendrücken der Bahn (27) in Sandwichform dazwischen befindet, bei dem Mittel zur Herstellung eines Temperaturgefälle durch die Bahndicke vorgesehen sind, so daß sich die erste Oberfläche auf einer höheren Temperatur als die zweite Oberfläche befindet, wobei das Temperaturgefälle so groß ist, daß die durch die Laufbänder auf die Bahn einwirkenden Scherkräfte bei oder nahe der ersten Bahnoberfläche und nicht bei oder nahe der zweiten Bahnoberfläche ein Scheren der Bahn hervorrufen, und bei der Mittel (16) zum zuführen der Bahn zur ersten Umlauftrommel derart vorgesehen sind, daß die erste Bahnoberfläche radial ganz innen liegt.

15. Vorrichtung nach Anspruch 14, bei der das genannte Bahnzuführungsmittel eine Führungswalze umfaßt, die der genannten ersten Umlauftrommel vorgeschaltet ist.

16. Vorrichtung nach Anspruch 14 oder 15, bei der an einem nachgeschalteten Ende der Vorrichtung eine Führungswalze (17) vorgesehen ist, um zu gewährleisten, daß die genannte zweite Bahnoberfläche ganz oben liegt, wenn die Bahn die Vorrichtung verläßt.

17. Vorrichtung nach einem der Ansprüche 14 bis 16, bei der die erste Umlauftrommel (20) als Heizquelle zum Beheizen der radial ganz innen gelegenen Bahnoberfläche verwendet wird und außerhalb der ersten Umlauftrommel Zusatzheizungen (25) zum Beheizen der radial ganz außen gelegenen Bahnoberfläche vorgesehen sind.

18. Vorrichtung nach Anspruch 17, bei der die Zusatzheizungen Heizstrahler sind.

19. Vorrichtung nach Anspruch 17, bei der die Zusatzheizungen Konvektionsheizkörper sind.

20. Vorrichtung nach einem der Ansprüche 14 bis 19, bei der außerhalb der ersten Umlauftrommel Kühlmittel (26) angeordnet sind, die gegebenenfalls ein schnelles Absenken der Temperatur der Bahn und der ersten Umlauftrommel ermöglichen und somit für bessere Regelung der Temperatur der Bahn beim Umlaufen der ersten Umlauftrommel sorgen.

21. Vorrichtung nach Anspruch 20, bei der das Kühlmittel ein Kühlluft-Hochgeschwindigkeitsdüsensystem ist.

22. Vorrichtung nach einem der Ansprüche 17 bis 21, bei der Mittel zum Vorheizen der Bahn vor ihrer Zuführung zur ersten Umlauftrommel vorgesehen sind, damit das durch die Bahndicke erforderliche Temperaturgefälle im wesentlichen noch bevor die Bahn die erste Umlauftrommel erreicht hergestellt ist.

23. Vorrichtung nach Anspruch 22, bei der das genannte Vorheizmittel eine Umlauftrommel (16), auf der die in Sandwichform zwischen den beiden Laufbändern liegende Bahn geführt wird, sowie eine außerhalb der Vorheiztrommel gruppierte Anordnung von Heizkörpern (31) umfaßt.

24. Vorrichtung nach einem der Ansprüche 14 bis 23, bei der das durch die Bahndicke gehende Temperaturgefälle an jedem gegebenen Bahnabschnitt im wesentlichen konstant gehalten wird, während dieser Bahnabschnitt um die erste Umlauftrommel herum läuft.

25. Vorrichtung nach einem der Ansprüche 14 bis 24, bei der die erste Bahnoberfläche so beheizt wird, daß ihre Temperatur etwa zehn bis fünfzehn Grad Celsius höher liegt als die der zweiten Bahnoberfläche.

26. Vorrichtung nach Anspruch 17 und nach einem der Unteransprüche von Anspruch 17, umfassend weiterhin eine zweite, der ersten Umlauftrommel (20) nachgeschaltete Umlauftrommel (21) sowie Mittel zur Abkühlung der Bahn beim Umlaufen der zweiten Umlauftrommel.

27. Vorrichtung nach Anspruch 26, bei der die Bahn so abgekühlt wird, daß die erste Bahnoberfläche beim Umlaufen der Bahn auf der zweiten Umlauftrommel bei einer höheren Temperatur gehalten wird als die zweite Bahnoberfläche.

28. Vorrichtung nach Anspruch 26 oder Anspruch 27, bei der die zweite Umlauftrommel ein Kühlmittel zum Abkühlen der zweiten Bahnoberfläche bildet und außerhalb der zweiten Umlauftrommel ein Zusatzkühlmittel (26) zum Abkühlen der ersten Bahnoberfläche vorgesehen ist.

29. Vorrichtung nach einem der Ansprüche 26 bis 28, bei der Mittel zum Einzelantrieb des ersten und zweiten Laufbandes und zur Steuerung ihrer Relativgeschwindigkeit zueinander vorgesehen sind, so daß die Laufbänder beim Umlaufen der zweiten Umlauftrommel nicht gegenseitig verrutschen.

30. Vorrichtung nach einem der Ansprüche 14 bis 28, bei der Mittel zum Einzelantrieb des ersten und zweiten Laufbandes und zur Steuerung ihrer Relativgeschwindigkeit zueinander vorgesehen sind, so daß die Laufbänder beim Umlaufen der ersten Umlauftrommel nicht gegenseitig verrutschen.

## Revendications

1. Procédé pour comprimer une bande en continu (27), dans lequel une première surface de la bande est mise en contact avec une première courroie (14), une seconde surface de la bande est mise en contact avec une seconde courroie (22) et les courroies passent autour d'au moins un premier tambour rotatif (20) en enserrant la bande entre eux pour comprimer la bande (27), dans lequel un gradient de température est établi à travers l'épaisseur de la bande de telle sorte que la première surface se trouve à une température supérieure à celle de la seconde surface, le qradient de température étant suffisant pour que des forces de cisaillement exercées sur la bande par les courroies provoquent le cisaillement de la bande à la première surface de la bande ou en position adjacente à cette dernière, plutôt qu'à la seconde surface de la bande ou en position adjacente à cette dernière.

2. Procédé selon la revendication 1, dans lequel le premier tambour rotatif (20) est utilisé comme source de chaleur pour chauffer la surface de la bande située le plus à l'intérieur en direction radiale, des dispositifs de chauffage supplémentaires (15) étant prévus à l'extérieur du premier tambour rotatif pour chauffer la surface de la bande située le plus à l'extérieur en direction radiale.

3. Procédé selon la revendication 2, dans lequel les dispositifs de chauffage supplémentaires sont des dispositifs de chauffage par rayonnement.

4. Procédé selon la revendication 2, dans lequel les dispositifs de chauffage supplémentaires sont des dispositifs de chauffage par convection.

5. Procédé selon l'une quelconque des revendications précédentes, dans lequel le gradient de température à travers l'épaisseur entière de la bande, à n'importe quelle portion donnée de la bande, est maintenu à une valeur essentiellement constante lorsque cette portion de la bande passe autour du premier tambour rotatif.

6. Procédé selon l'une quelconque des revendications précédentes, dans lequel la bande est acheminée au premier tambour rotatif de telle sorte que la première surface de la bande représente la surface située le plus à l'intérieur en direction radiale.

7. Procédé selon l'une quelconque des revendications précédentes, dans lequel la première surface de la bande est chauffée à une température supérieure d'approximativement 10 à 15 degrés Celsius à la température de la seconde surface de la bande.

8. Procédé selon la revendication 2 et selon l'une quelconque des revendications dépendant de la revendication 2, comprenant une étape supplémentaire consistant à faire passer la bande enserrée entre les deux courroies autour d'un second tambour rotatif (21) en aval du premier tambour rotatif et à refroidir la bande lorsqu'elle passe autour du second tambour rotatif.

9. Procédé selon la revendication 8, dans lequel la bande est refroidie de telle sorte que la première surface de la bande est maintenue à une température supérieure à celle ce la seconde surface de la bande lorsque la bande passe autour du second tambour rotatif (21).

10. Procédé selon la revendication 8 ou 9, dans lequel le second tambour rotatif (21) forme un moyen de refroidissement pour refroidir la seconde surface de la bande, et on prévoit un moyen de refroidissement supplémentaire (26) à l'extérieur du second tambour rotatif pour refroidir la première surface de la bande.

11. Procédé selon l'une quelconque des revendications 8 à 10, dans lequel les première et seconde courroies (14, 22) sont entraînées de manière individuelle, leur vitesse relative étant réglée de telle sorte que l'on exclut tout patinage entre les courroies lorsqu'elles passent autour du second tambour rotatif (21).

12. Procédé selon l'une quelconque des revendications 1 à 10, dans lequel les première et seconde courroies (14, 22) sont entraînées de manière individuelle, leur vitesse relative étant réglée de telle sorte que l'on exclut tout patinage entre les courroies lorsqu'elles passent autour du premier tambour rotatif (20).

13. Procédé selon la revendication 2 et selon l'une quelconque des revendications dépendant de la revendication 2, dans lequel la bande est préchauffée avant son passage par le premier tambour rotatif pour établir essentiellement le gradient de température requis à travers l'épaisseur de la bande avant que celle-ci n'atteigne le premier tambour rotatif.

14. Appareil pour comprimer une bande en continu (27), comprenant une première courroie (14) mise en contact avec une première surface de la bande, une seconde courroie (22) mise en contact avec une seconde surface de la bande et au moins un premier tambour rotatif autour duquel passent les courroies entre lesquelles est enserrée la bande pour comprimer la bande (27), dans lequel on prévoit un moyen pour établir un gradient de température à travers l'épaisseur de la bande de telle sorte que la première surface se trouve à une température supérieure à celle de la seconde surface, le gradient de température étant suffisant pour que des forces de cisaillement exercées sur la bande par les courroies provoquent le cisaillement de la bande à la première surface de la bande ou en position adjacente à cette dernière plutôt qu'à la seconde surface de la bande ou en position adjacente à cette dernière, et dans lequel on prévoit un moyen (16) pour acheminer la bande au premier tambour rotatif de telle sorte que la première surface de la bande représente la surface située le plus à l'intérieur en direction radiale.

15. Appareil selon la revendication 14, dans lequel ledit moyen d'acheminement de la bande englobe un rouleau de guidage positionné en amont dudit premier tambour rotatif.

16. Appareil selon la revendication 14 ou 15, dans lequel un rouleau de guidage (17) est prévu à une extrémité en aval de l'appareil pour garantir que ladite seconde surface représente la surface située le plus au-dessus de la bande lorsque la bande quitte l'appareil.

17. Appareil selon l'une quelconque des revendications 14 à 16, dans lequel le premier tambour rotatif (20) est utilisé comme source de chauffage pour chauffer la surface de la bande située le plus à l'intérieur en direction radiale, et on prévoit des dispositifs de chauffage supplémentaires (25) à l'extérieur du premier tambour rotatif pour chauffer la surface de la bande située le plus à l'extérieur en direction radiale.

18. Appareil selon la revendication 17, dans lequel les dispositifs de chauffage supplémentaires sont des dispositifs de chauffage par rayonnement.

19. Appareil selon la revendication 17, dans lequel les dispositifs de chauffage supplémentaires sont des dispositifs de chauffage par convection.

20. Appareil selon l'une quelconque des revendications 14 à 19, dans lequel on dispose un moyen de refroidissement (26) à l'extérieur du premier tambour rotatif, par lequel on peut diminuer rapidement la température de la bande et du premier tambour rotatif en fonction des nécessités pour ainsi obtenir un contrôle supérieur de la température de la bande lorsqu'elle passe autour du premier tambour rotatif.

21. Appareil selon la revendication 20, dans lequel le moyen de refroidissement comprend un système d'éjecteur d'air de refroidissement à grande vitesse.

22. Appareil selon l'une quelconque des revendications 17 à 21, dans lequel on prévoit un moyen pour préchauffer la bande avant son passage par le premier tambour rotatif pour ainsi établir essentiellement le gradient de température requis à travers la bande avant qu'elle n'atteigne le premier tambour rotatif.

23. Appareil selon la revendication 22, dans lequel ledit moyen de préchauffage comprend un tambour rotatif (16) autour duquel passe la bande enserrée entre les deux courroies, et un arrangement de dispositif de chauffage (31) disposé à l'extérieur du tambour de préchauffage.

24. Appareil selon l'une quelconque des revendications 14 à 23, dans lequel le gradient de temperature à travers l'épaisseur entière de la bande, à n'importe quelle portion donnée de la bande, est maintenu à une valeur essentiellement constante lorsque cette portion de la bande passe autour du premier tambour rotatif.

25. Appareil selon l'une quelconque des revendications 14 à 24, dans lequel la première surface de la bande est chauffée à une température supérieure d'approximativement 10 à 15 degrés Celsius à la température de la seconde surface de la bande.

26. Appareil selon la revendication 17 et selon l'une quelconque des revendications dépendant de la revendication 17, comprenant en outre un second tambour rotatif (21) en aval du premier tambour rotatif (20), ainsi qu'un moyen pour refroidir la bande lorsqu'elle passe autour du second tambour rotatif.

27. Appareil selon la revendication 26, dans lequel la bande est refroidie de telle sorte que la première surface de la bande est maintenue à une température supérieure à celle de la seconde surface de la bande lorsque la bande passe autour du second tambour rotatif.

28. Appareil selon la revendication 26 ou 27, dans lequel le second tambour rotatif forme un moyen de refroidissement pour refroidir la seconde surface de la bande, et on prévoit un moyen de refroidissement supplémentaire (26) à l'extérieur du second tambour rotatif pour refroidir la première surface de la bande.

29. Appareil selon l'une quelconque des revendications 26 à 28, dans lequel on prévoit un moyen pour entraîner de manière individuelle les première et seconde courroies, et pour régler leur vitesse relative de telle sorte que l'on exclut tout patinage entre les courroies lorsqu'elles passent autour du second tambour rotatif.

30. Appareil selon l'une quelconque des revendications 14 à 28, dans lequel on prévoit un moyen pour entraîner de manière individuelle les première et seconde courroies, et pour régler leur vitesse relative de telle sorte que l'on exclut tout patinage entre les courroies lorsqu'elles passent autour du premier tambour rotatif.
